# EUROPEAN PATENT SPECIFICATION

(11) **EP 0 352 917 B1**
(45) Date of publication and mention of the grant of the patent: **27.04.1994**
(21) Application number: 89306766.0
(22) Date of filing: 04.07.1989
(51) Int. Cl.: B01D 15/08, G01N 30/48

(54) **The selective removal of chemical species from a fluid**
Selektive Entfernung chemischer Spezies aus einem Fluid
Elimination sélective d'espèces chimiques d'un fluide

(30) Priority: 06.07.1988 GB 8816066; 06.01.1989 GB 8900241
(43) Date of publication of application: 31.01.1990
(73) Proprietor: EASTMAN KODAK COMPANY, Rochester, New York 14650-2201 (US); KODAK LIMITED, Hemel Hempstead Herts, HP1 1JU (GB)
(72) Inventor: Thomson, Alan Russell, Bucks, HP9 2EH (GB); Padday, John Frank, Nr. Beaconsfield Bucks (GB)
(74) Representative: Nunney, Ronald Frederick Adolphe

(56) References cited:
- EP-A- 0 105 579
- US-A- 4 551 435
- PATENT ABSTRACTS OF JAPAN vol. 12, no. 22 (C-470)(2869) 22 January 1988,& JP-A-62 176547 (MITSUBISHI CHEM IND LTD) 03 August 1987,
- PATENT ABSTRACTS OF JAPAN vol. 8, no. 150 (C-233)(1587) 12 July 1984, & JP-A-59 55348 (SUMITOMO GENSHIRIYUKO KOKYO K.K.) 30 March 1984

## Description

The invention relates to the selective removal of chemical species from a fluid.

It is known that chemical species in a fluid e.g. a liquid solution or suspension, may be selectively removed and thereby separated from other species by contacting the fluid with a solid material having sites capable of selectively interacting with the species to be removed. Various forms of interaction are possible. For example, the interaction may be predominantly chemical such as ion exchange or chelation, or it may be of a biochemical nature such as the formation of affinity complexes between biochemical molecules, cells or other particulates. If the interaction is reversible, the species which has interacted specifically can be recovered.

The site on the solid material at which interaction occurs may comprise an atom, a group of atoms or a molecule, commonly referred to as a ligand, which is attached to the material and is capable of selectively interacting with the species to be removed.

In one aspect, the invention makes use of biospecific affinity reactions and, in particular, immunochemical reactions. In this case, the ligand may be an immunochemical component e.g. a protein which exhibits biospecific affinity for another immunochemical component. An important class of such reactions is that between an antigen (or hapten) and an antibody directed against it. The use of monoclonal antibodies allows highly specific affinity reactions to be carried out.

Examples of antigens, commonly referred to as foreign substances, include viruses, bacteria, bacterial toxins, carbohydrates, hormones, drugs and lectins.

In addition, other reactions between biologically active compounds, such as enzymes and their substrates, are often sufficiently specific and have sufficient affinity to be employed for separations. In addition, small molecules such as amino acids may interact specifically and with sufficient affinity with, for example, proteins to enable separation to be achieved.

A known method for removing a chemical species from solution involves the use of an affinity chromatography column. The column is packed with beads of a porous polymer gel e.g. crosslinked agarose, to which a ligand has been covalently bonded. For example, such polymer gels are described in US-A-4 330 440. It is known from this specification and other art that a ligand can be covalently bonded to an activated polymer i.e. a polymer having active groups present on its surface with which a ligand is capable of reacting. Suitable active groups include functional groups which, if necessary, can be produced in an activatable polymer by treating the polymer with an activating agent. For example, an activatable polymer such as agarose having hydroxyl groups at its surface can be treated with a carbonylating agent or cyanogen bromide to produce functional groups at its surface capable of reacting with a protein ligand.

When the affinity chromatography column is in use, solution containing the species to be removed is passed through and between the beads so that the species becomes attached to the ligands. A number of drawbacks are associated with this method. These include the fact that the polymer gel is difficult to handle. Further, because the beads are compressible, the packing of the beads in a column can lead to an excessive backpressure when the solution is passed through. Also, diffusion of the solution through the pores of the polymer beads is a relatively slow process and the beads can act as a filter for particulate material e.g. cells. Yet another drawback is that the ligand is distributed throughout the porous structure of the beads with varying degrees of accessibility and hence may be used inefficiently.

In another known method, the solution containing the chemical species to be removed is passed through a filter comprising a fibrous matrix e.g. filter paper, or a porous polymeric membrane to which the ligand is attached. Such filters suffer from a tendency to become blocked when particulate material is passed through them and may also have the drawbacks associated with pore diffusion and ligand utilization discussed above.

US-A-4 551 435 describes a method for selectively removing immunospecifically recognizable substances from biological fluids such as whole blood and bone marrow. Undesirable antigens or antibodies can be filtered from blood by first complexing the antigen or antibody with the corresponding complementary antibody or antigen. Immune complexes so formed are then passed by an adsorbent exhibiting affinity for immune complexes. A ligand consisting of a non-immunospecific factor e.g. Clq is coupled to a solid phase to provide the adsorbent.

The affinity separation described in US-A-4 551 435 may be carried out by passing the fluid through a chamber containing a helically wound sheet having opposite surfaces for receiving the non-immunospecific factor. The helical convolutions of the sheet are separated by spacer means and, in use, the fluid flows through the convolutions either axially or circumferentially. The only specific example of the adsorbent is a polystyrene sheet to which the non-immunospecific factor Clq is bound.

A major drawback associated with the use of a polystyrene sheet having Clq bound thereto is that the Clq is adsorbed and not covalently bound to the sheet and is liable to become desorbed. Furthermore, the polystyrene surface will adsorb other biologically active compounds from the fluid passed over it which compounds could act as additional ligands. Moreover, when adsorption occurs, there is no control over the orientation of the adsorbed species with the result that the activity and/or specificity of the ligand may be affected. In this respect, the ligand which may be used in the method and immunoadsorbent material described in US-A-4,551,435 is restricted to being a non-immunospecific factor. Another drawback associated with the use of a polystyrene sheet is that it has a hydrophobic surface which is liable to inactivate a protein.

The present invention aims to solve the problems described above in relation to the prior art.

The present invention provides an element for use in the selective removal of a chemical species from a fluid comprising an impervious support sheet the surface of which is adapted to receive a ligand for the species to be removed characterized in that the support sheet has adhered thereto a layer of a polymer having at its surface functional groups through which the ligand is directly or indirectly covalently bonded to the polymer.

The invention also provides a method for the selective removal of a chemical species from a fluid which method comprises contacting the fluid with an element according to the invention.

In accordance with another aspect of the invention there is provided an apparatus for the selective removal of a chemical species from a fluid comprising a housing defining a chamber, the housing having fluid inlet and outlet means, the chamber holding at least one element comprising a ligand for the species to be removed, the element or elements being positioned relative to the inlet and outlet to define a flow path such that, when the apparatus is in use, fluid entering the chamber through the inlet is passed over the surface of the element or elements before leaving the chamber through the outlet, characterized in that the element is an element of the invention.

Preferably, the flow path is such that the depth of the fluid passing over the element or elements is from 20 to 500µm, more preferably from 30 to 200µm.

The invention is illustrated, by way of example, in the accompanying schematic drawings wherein:
Fig. 1 is a cross sectional view of a preferred element of the invention;
Fig. 2 is a perspective view of the exterior of an apparatus in accordance with the invention;
Fig. 3 is a longitudinal sectional view taken along line 2-2 of Fig. 2; and,
Fig. 4 is a transverse sectional view taken along lines 3-3 of Fig. 2.

The support sheet of the element of the invention may be formed from a variety of materials. For example, a suitable material may be a metal, glass or polymer. Many polymeric materials which can be formed into a sheet or film are suitable including, for example, cellulose ethers or esters e.g. cellulose acetate, polyesters e.g poly(ethylene terephthalate), polyolefins e.g. poly(propylene) and poly(vinylchloride).

The thickness of the support may vary widely depending on the material from which it is made and on the way the element is used. For compactness, the support sheet is preferably as thin as possible while still meeting mechanical stability requirements. As an example, the thickness of the support sheet may be from 0.01 to 0.5mm, more preferably from 0.05 to 0.2mm.

Preferably, the support sheet is flexible. It is also preferred that the support sheet is flat.

The polymer layer may be present as an activated polymer layer i.e. containing functional groups which will react directly with the ligand. Alternatively, it may be present as an activatable polymer layer which is subsequently activated by treatment with an activating agent. The activating agent may convert a functional group of the activatable polymer into a functional group capable of reaction with the ligand or it may be a coupling agent which becomes attached to the polymer by reaction with a functional group of the activatable polymer.

Examples of activating agents include divinyl sulphone, cyanogen bromide and glutaraldehyde.

Suitable polymers may be derived from monomers such as ethylenically unsaturated hydroxy group-containing monomers e.g. hydroxyethyl methacrylate (HEMA), ethylenically unsaturated oxirane group-containing monomers e.g. glycidyl acrylate and ethylenically unsaturated amide group-containing monomers e.g. acrylamide.

In order to achieve the removal of a selected chemical species from a fluid e.g. the removal of a specific protein from a mixture thereof, the polymer is preferably such that non-specific adsorption on the element is minimal.

Preferably, the activated or activatable polymer is substantially hydrophilic. Particularly suitable chemical groups which confer hydrophilicity on the polymer include hydroxyl, amino, carboxyl and thiol groups.

In order to minimise the problems associated with the use of porous materials, the activated or activatable polymer layer may be substantially non-porous. If the activated or activatable polymer layer is porous, it is preferred that the pores are sufficiently small to exclude the entry into the layer of the ligand or the species to be removed e.g. a protein. Preferably, the activated polymer layer is substantially non-swellable.

For ease of manufacture, it is preferred that the activatable or activated polymer is solvent-coatable e.g. coatable from solution in water and/or an organic solvent. In this way, conventional coating machinery including, for example, slide hoppers or extrusion hoppers, can be used to produce efficiently large quantities of coated product.

Preferably, the activatable or activated polymer layer constitutes a continuous layer over the support.

The thickness of the activated polymer layer will depend upon such factors as the particular polymer employed. Since, in a preferred embodiment, the interaction between the ligand and the species to be removed takes place predominantly at the surface of the layer, it need only be sufficiently thick to provide adequate attachment of the ligand to the support sheet. By way of example, the dry thickness of the activated polymer layer may be from 5 to 100µm, more preferably from 10 to 50µm.

Adequate adhesion between the activated polymer layer and the support sheet may be obtained by appropriate selection of the two materials involved. Alternatively, adhesion may be promoted by other means such as the use of a subbing layer or by subjecting the support sheet to a corona discharge or RF plasma treatment before applying the polymer layer.

In one preferred embodiment of the invention, a layer of activated polymer is provided on each side of the support sheet.

Various methods may be employed in order to maximise the surface area of the activated or activatable polymer layer relative to the surface area of the support sheet. In one such method, the layer contains inert particulate material which raises the surface of the layer in the vicinity of each particle. The particulate material may be in the form of beads. Suitable materials from which the particles may be formed include polymers and glass.

In a particularly preferred embodiment of the invention, the activated or activatable polymer layer contains particulate material which acts as spacer means i.e. the particulate material provides the means whereby an element of the invention can be spaced apart from another element or another part of the same element held against it. The particulate material may be held chemically on or within the polymer coating. Preferably, the particulate material comprises particles of substantially uniform shape and dimension. For many applications, it is desirable that the individual particles are distributed within the layer so as to provide a substantially uniform distance of separation between contiguous elements.

As described above, the particulate material may take a variety of forms including, for example, beads of polymer or glass. The dimension of the particles which determines the degree of spacing they provide will depend on such factors as the separation distance required between contiguous elements and the thickness of the activated polymer layer. Substantially spherical beads of an inert material all having substantially the same diameter within the range from 20 to 500µm, preferably 30 to 200µm, represent an example of a suitable particulate material.

A particularly advantageous feature of the particulate spacer means described above is that it is possible to coat the particulate material with the polymer layer. In this way, an element having integral spacer means is produced. By simply preparing a homogeneous coating composition comprising the polymer or monomers from which the polymer layer is formed and the particulate material, the particles will be uniformly distributed over the coated layer thereby ensuring uniform separation.

The use of beads or other suitable particulate material adhered to the surface of a substrate as spacer means is considered to be new.

Generally, before the element can be used for removing a substance from a fluid e.g. an aqueous solution or suspension, a ligand for the substance is covalently attached to the activated polymer layer of the element. In the preferred embodiment of the invention wherein the polymer layer is substantially non-porous, the ligand will be attached predominantly on the surface of the layer.

The method for removing a substance from a fluid may be carried out in the apparatus of the invention. The element of the invention contained by the apparatus may be configured in a number of different ways.

For example, the apparatus may comprise a plurality of elements in face to face configuration, each element being separated from adjacent elements by spacer means.

In a preferred embodiment of the apparatus, the element is in the form of a coil wherein the convolutions of the coil are separated by spacer means and the defined flow path is axial relative to the axis of the coil.

In another preferred embodiment, the element is in the form of a coil wherein the convolutions of the coil are separated by spacer means and the defined flow path is circumferential through the convolutions.

Preferably, the spacer means provides a substantially constant separation distance between adjacent surfaces of the element or elements. The separation distance may be from 20 to 500µm, preferably from 30 to 200µm.

As described above, the spacer means may be integral with the element. Alternatively, the spacer means may be separate and take the form of, for example, tape, rods or a mesh-like structure which permit the flow of fluid through the apparatus.

When it is not important for the spacer means to provide a substantially uniform distance of separation, the spacer means may be the element itself. For example, the element may be corrugated and adjacent parts of it or adjacent separate elements arranged so that only parts of the element or elements are contiguous.

In one aspect of the invention, the element or apparatus may be used to remove a biologically active molecule from a mixture thereof by utilising a biospecific affinity reaction. In this instance, the ligand may be a biospecific ligand e.g. a protein, and the activated polymer will comprise suitable functional groups through which the protein can be covalently bonded to the polymer. Such groups are well-known and include hydroxyl, amine and thiol groups. An example of a protein ligand is protein A.

Many biospecific affinity reactions are known and a particular example is that represented by the reaction of an antigen and an antibody raised against it. With the wide range of monoclonal antibodies available, it is now possible to perform a wide range of highly specific affinity reactions. A particular antibody ligand which has been used in the invention is a rat anti-mouse kappa-chain antibody.

Other ligands which may be used include reactive dyed such as triazine dyes e.g. Procion® MX-R and Cibacron® Blue F3G-A.

Advantages associated with the use of the apparatus of the invention include the fact that it is capable of handling fluids containing particulate materials e.g. cells and hence is very much less prone to blockage by such particulate material compared to available apparatus. Further, the apparatus is self-contained, and convenient to use and dispose of which makes it suitable for once only use if desired. This is an important consideration when handling materials containing substances such as pathogens, viruses or DNA products, or when the treated fluid is to be re-injected into a patient (e.g. bone marrow purging). Additionally, the apparatus is readily pre-packaged and, if desired, pre-sterilized.

It will be appreciated that the apparatus could be supplied in different forms having regard to the nature of the element contained therein. For example, the polymer layer could be in activatable form so that, before use, it would require treatment with an activating agent and subsequent treatment for binding the ligand. Alternatively, the polymer layer could already be activated and simply require treatment for binding the ligand. Finally, the apparatus could be supplied with ligand attached to the element.

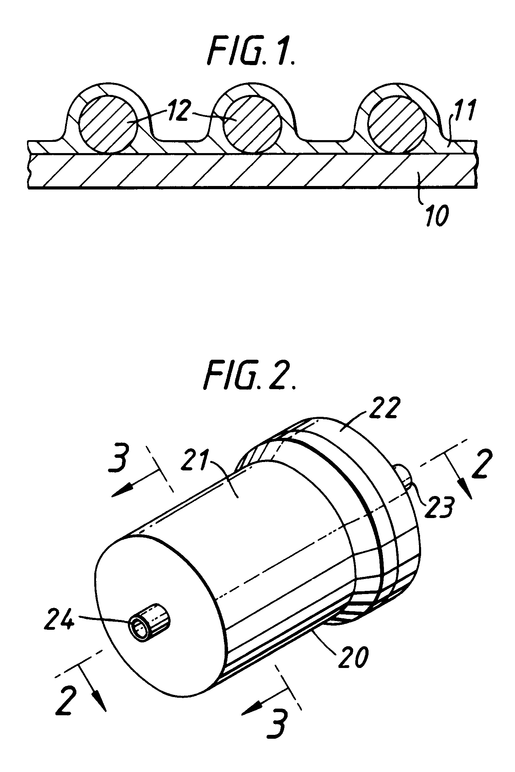

The element and apparatus of the invention is further described with reference to and as illustrated in Figures 1 to 4 (not to scale).

Fig. 1 shows a cross-sectional view of an element of the invention. The element comprises a support sheet 10 coated with a layer of an activatable or activated polymer 11. Beads 12 incorporated in the layer 11 adhere to the support 10.

Fig. 2 is a perspective view of the exterior of an apparatus of the invention. The housing 20 is shown which may be moulded from a plastics material e.g. polypropylene. The housing 20 comprises a cylindrical body portion 21 to which is attached a lid 22. The lid is provided with fluid inlet tube 23 and the body portion is provided with a fluid outlet tube 24.

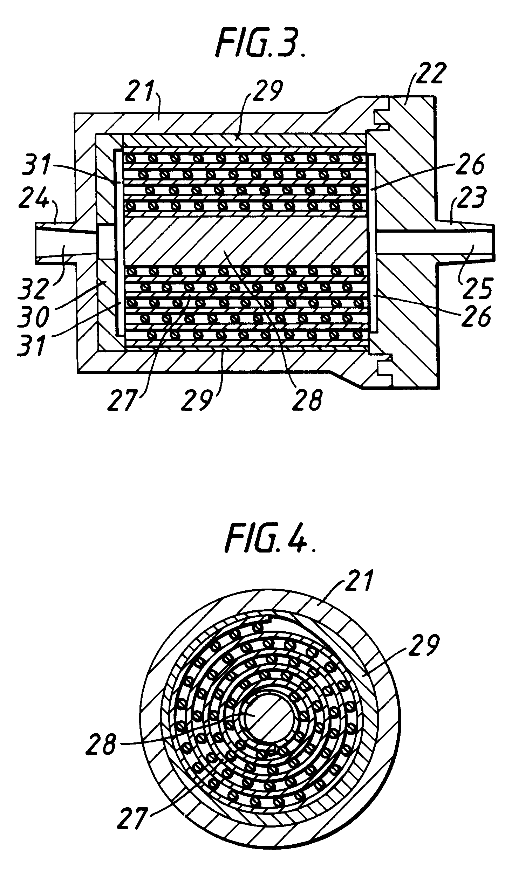

Figs. 3 and 4 are sectional views taken along lines 2-2 and 3-3, respectively, of Fig. 2.

The lid 22 contains an axial passageway 25 through which fluid may be passed into the chamber defined by the housing 20. The inner surface of the lid 22 is provided with grooves 26 extending radially from the passageway 25 to spread the flow of fluid as it enters the chamber. The chamber contains a coil 27 of an element of the invention. An element of the type shown in Fig.1 is helically wound on a cylindrical core 28. (The polymer layer 11 is not shown in Figures 3 and 4). The outer winding of the coil is attached to the body of the coil by an adhesive tape 29 which is co-extensive with the outer surface of the coil and provides a fluid-tight seal between the coil and the inner surface of the housing 20.

The coil fills the chamber between the lid 22 at one end and a polypropylene disc 30 held against the circular wall of the chamber at the other end. The surface of the disc facing the coil is provided with grooves 31 extending radially from a central passageway running axially through the disc. This passageway communicates with the passageway 32 passing through the end wall of the housing and outlet tube 24.

When the apparatus is in use, fluid entering the chamber through the inlet passes axially through the convolutions of the coil before leaving the chamber through the outlet.

It is emphasized that the drawings and, in particular, the representation of the coil are schematic. In practice, the overall thickness of the element may be of the order of 200µm. A coil has been produced from such an element in the form of a strip 35mm wide and 11m long helically wound on a central cylindrical core having a diameter of approximately 12mm. Such a coil has been contained in an apparatus of the type shown having an overall length of 80mm and an external diameter of 70mm. Clearly, the coil consists of many closely-spaced convolutions which it would be impossible to show adequately in a scale drawing.

The invention is further described by way of example as follows.

### Example 1

A coating solution was prepared containing 10% w/w poly-hydroxyethyl methacrylate (HEMA) in ethanol and glutaraldehyde cross-linking agent in an amount of 5% w/w polymer.

An extrusion hopper was used to coat the solution onto one side of a corona-discharge treated polyethylene terephthalate sheet having a thickness of 0.08mm. The flowrate of the solution was adjusted to give a wet laydown of 100 µm at a coating speed of 3m/min. The coating was dried at room temperature in the coating machine for about 20 minutes and cured at 90 deg C for about 2 days.

The coating operation was also carried out on the other side of the sheet with the modification that the solution contained silica-coated polystyrene spacer beads having a diameter of 50µm to give a density of about 200 beads/sq.cm in the dried product.

The dry thickness of the cross-linked polymer layer was 10-20µm and it had minimal swelling in water.

The sheet so produced was slit into 11m lengths each 35mm wide.

Such a strip was spooled under clean conditions onto a central core and the coiled element inserted into an apparatus similar to that shown in Figures 2-4.

The apparatus was weighed dry and then flushed with "Millipore" quality water for several hours to remove any residual cross-linking agent and then reweighed. The difference in mass indicated that the fill volume of the apparatus was about 27ml (ie. the volume of liquid which the dry apparatus will hold).

Procion®-Blue MXR dye was then coupled to the polymer layer by circulating through the apparatus 100ml of a solution containing 1g dye, 30ml 4M NaCl, 0.2ml 10M NaOH, at 40 deg C for 2 hours at a flowrate of 10ml/min. The apparatus was then flushed with water for 2 hours. It was then flushed with 600ml 0.2M Phosphate/1M NaCl solution, then with water again and finally with 0.14M PBS.

Albumin was then separated from rabbit serum by circulating 50ml freshly defrosted serum at 20ml/min through the apparatus for 2 hours, occasionally stopping the flow to allow good contact between the serum and the polymer layer.

The apparatus was then flushed with PBS until the washings had zero UV absorbance at 280nm.

60ml of 0.005M Tris/HCl/0.2M NaSCN was passed through the apparatus at 10ml/min to elute 6mg albumin and a further 20ml was circulated through the apparatus at 10ml/min for 1/2 hour to elute a further 6mg albumin.

Protein recovery was determined by optical absorption at 280nm and electrophoresis was used to identify the recovered albumin.

### Example 2

### 1. Synthesis of poly(2-hydroxyethyl methacrylate-co-methyl-methacrylate-co-methacrylic acid-co-3-chloro-2-hydroxypropyl methacrylate (16:1:1:2)

A one litre, 3-necked round bottom flask, fitted with a condenser and nitrogen inlet, was charged with the following:

| | |
|---|---|
| 2-hydroxyethyl methacrylate (0.48 moles) | 62.45g |
| methyl methacrylate (0.03 moles) | 3.00g |
| methacrylic acid (0.03 moles) | 2.55g |
| 3-chloro-2-hydroxypropyl methacrylate (0.06 moles) | 10.72g |
| p-toluenesulphonic acid monohydrate | 2.10g |
| bis (4-tert.butylcyclohexyl)-peroxydicarbonate | 0.79g |
| ethanol/methyl cellosolve (9:1 v/v) | 250 ml |

The solution was stirred at 50°C for 17 hours. Nitrogen was bubbled through the solution throughout this period. The polymer was recovered by precipitation into an excess of diethyl ether and dried in a desiccator. (Yield=74.9g).

### 2. Coating the Polymer

A coating solution was prepared consisting of 10% w/w of the above polymer in 100% dimethylformamide plus 10% w/w tetrabutyl ammonium hydroxide/polymer. 50µm silica-coated styrene beads were incorporated in suspension in the solution as spacer beads.

The solution was coated on one side of a corona discharge treated polyethylene terephthalate sheet to provide a wet laydown thickness of 100µm. The coating was dried at 90°C for about 20 minutes. The other side of the sheet was similarly coated except that the coating solution did not contain the spacer beads.

The coating was stable in water, salt solutions, ethanol, acetone and dimethylformamide demonstrating that effective cross-linking had taken place.

The coated sheet was slit into strips approximately 15m long and 35mm wide. A strip was spooled under clean conditions onto a central core and the coiled element was inserted into an apparatus similar to that shown in Figures 2-4 made of polypropylene. After inserting the coiled element into the body of the apparatus, the lid was attached by ultrasonic welding.

The apparatus was flushed with "Millipore" quality water.

### 3. Chromatographic Use

Cibacron® Blue F3G-A dye was coupled to the coiled element in accordance with the following procedure. 2.4g of dye dissolved in 65ml water and 10ml sodium chloride solution (4M) was pumped through the previously flushed apparatus at 60ml/min for 30 mins. The apparatus was left standing for 90 mins at room temperature to allow the dye to adsorb to the polymer surface. 1.25ml of sodium hydroxide solution (10M) was added to the dye solution which was circulated through the apparatus for 30 mins at a pH greater than 12. The inlet and outlet ports of the apparatus were sealed and it was stored in a shaker at 25°C for two days.

Water was flushed through the apparatus at 60ml/min until no dye was detected by spectral absorption at 280nm. Any uncoupled dye was removed from the coating surface by flushing with sodium chloride (1M)/ethyl alcohol(25%) solution.

The apparatus was flushed with 200ml 0.05M phosphate buffer solution (pH 7) at 50ml/min. 50ml untreated rabbit serum was loaded into the apparatus at 30ml/min. The first 30ml solution leaving the apparatus was discarded and the remaining solution was circulated through the apparatus for 30mins at the same flowrate. The pump was then switched off and the apparatus was left standing for a further 30mins. 0.05M phosphate buffer solution was flushed through the apparatus at 60ml/min until UV absorption at 280nm of the washings was zero.

Elution was carried out with a chosen solution at 30ml/min and the first six fractions collected. The solution was circulated at 30ml/min for 10mins and a seventh fraction was collected. The flowrate was increased to 60ml/min and a further 2x20ml fractions were collected.

Using 0.2M NaSCN/0.05M Tris/HCl (pH 8) as the eluent for a number of runs yielded 3-11mg albumin.

Protein recovery was determined by optical absorption at 280nm and electrophoresis was used to identify the recovered protein.

Albumin recovery has also been demonstrated using Procion® MX-R dye instead of Cibacron® F3G-A following the procedure of this Example.

### Example 3

A polymer-coated polyethylene terephthalate sheet was prepared as described in parts 1 and 2 of Example 2 except that 100µm silica-coated styrene beads were used instead of the 50µm size beads.

Samples of the coated polymer were activated by treatment with a 4% divinylsulphone solution in 0.5M sodium bicarbonate, pH 11. Rat anti-mouse K-chain monoclonal antibody at 0.8 mg/ml was coupled to the activated polymer coatings in 0.1M sodium bicarbonate, 0.5M sodium chloride solution at pH 8. The rat anti-mouse K-chain antibody was purified from ascites fluid obtained from Sera-lab (clone OX-20, code MAS 202C).

Jurkat cells, a human T-cell leukaemia (J. Experimental Medicine 152: 1709, 1980; Gillis, S., and Watson, J) grown in RPMI 1640 medium supplemented with 5% foetal calf serum (both from Flow Laboratories) were washed free of medium and resuspended in phosphate-buffered saline. (PBS composition: 0.15M NaCl, 2.7 mM KCl, 8mM Na₂HPO₄, 1.5 mM KH₂PO₄, pH 7.2). The viability of the cells was greater than 85% as judged by trypan blue exclusion.

A total of 3.1x10⁷ Jurkat cells (5.2x10⁶ cells/ml) were labelled with a mouse monoclonal antibody against the T cell surface antigen CD2. The antibody was obtained from Becton Dickinson Ltd., (Anti-Leu-5b, catalogue No. 7590). The antibody was added to the cells in the proportion 0.5µg antibody/10⁷ cells. Cells and antibody were incubated together, after which excess antibody was removed by centrifugation and the labelled cells resuspended in PBS.

The polymer coatings to which OX-20 was coupled were incubated with the suspension of the labelled cells. The coatings were subsequently washed with PBS and examined microscopically. The coatings showed a good even coverage of bound cells at high density.

For comparison, samples of the coating were incubated with non-antibody labelled cells. Subsequent microscopic examination revealed that virtually no cells had become bound to the polymer.

## Claims

1. An element for use in the selective removal of a chemical species from a fluid comprising an impervious support sheet (10) the surface of which is adapted to receive a ligand for the species to be removed characterized in that the support sheet (10) has adhered thereto a layer of a polymer (11) having at its surface functional groups through which the ligand is directly or indirectly covalently bonded to the polymer.

2. An element according to claim 1 wherein the thickness of the support sheet (10) is from 0.05 to 0.5mm.

3. An element according to claim 1 or claim 2 wherein the polymer layer (11) is substantially hydrophilic.

4. An element according to any one of the preceding claims wherein the polymer layer (11) is substantially non-porous.

5. An element according to any one of the preceding claims wherein the polymer (11) is derived from an ethylenically unsaturated monomer containing hydroxy groups.

6. An element according to any one of the preceding claims wherein the polymer (11) is crosslinked hydroxyethyl methacrylate.

7. An element according to any one of the preceding claims wherein the thickness of the polymer layer (11) is from 5 to 100µm.

8. A method for the selective removal of a chemical species from a fluid which method comprises contacting the fluid with an element according to any one of claims 1 to 7.

9. An apparatus for the selective removal of a chemical species from a fluid comprising a housing (21) defining a chamber, the housing having fluid inlet and outlet means (23,24), the chamber holding at least one element (27) comprising a ligand for the species to be removed, the element or elements (27) being positioned relative to the inlet (23) and outlet (24) to define a flow path such that, when the apparatus is in use, fluid entering the chamber through the inlet (23) is passed over the surface of the element or elements (27) before leaving the chamber through the outlet (24), characterized in that the element (27) is an element (27) according to any one of claims 1 to 7.

10. An apparatus according to claim 9 comprising the element (27) in the form of a coil wherein the convolutions of the coil are separated by spacer means (12) and the defined flow path is axial relative to the axis of the coil.

11. An apparatus according to claim 9 comprising the element (27) in the form of a coil wherein the convolutions of the coil are separated by spacer means (12) and the defined flow path is circumferential through the convolutions.

12. An apparatus according to claim 10 or claim 11 wherein the separation distance provided by the spacer means (12) is substantially constant.

13. An apparatus according to claim 12 wherein the separation distance provided by the spacer means (12) is from 20 to 500µm.

## Patentansprüche

1. Element für die selektive Entfernung einer chemischen Spezies aus einem Fluid mit einem undurchlässigen Trägerblatt (10), dessen Oberfläche derart ausgestaltet ist, daß sie einen Liganden für die Spezies, die entfernt werden soll, aufzunehmen Vermag, dadurch gekennzeichnet, daß auf dem Trägerblatt (10) eine Schicht eines Polymeren (11) haftet, die an ihrer Oberfläche funktionelle Gruppen aufweist, durch die der Ligand direkt oder indirekt kovalent an das Polymer gebunden wird.

2. Element nach Anspruch 1, in dem die Dicke des Trägerblattes (10) bei 0,05 bis 0,5 mm liegt.

3. Element nach Anspruch 1 oder Anspruch 2, in dem die Polymerschicht (11) wesentlich hydrophil ist.

4. Element nach einem der vorstehenden Ansprüche, in dem die Polymerschicht (11) wesentlich nicht-porös ist.

5. Element nach einem der vorstehenden Ansprüche, in dem das Polymer (11) sich von einem ethylenisch ungesättigten Monomeren ableitet, das Hydroxygruppen aufweist.

6. Element nach einem der vorstehenden Ansprüche, in dem das Polymer (11) ein quervernetztes Hydroxyethylmethacrylat ist.

7. Element nach einem der vorstehenden Ansprüche, in dem die Dicke der Polymerschicht (11) bei 5 bis 100 µm liegt.

8. Verfahren zur selektiven Entfernung einer chemischen Spezies aus einem Fluid, bei dem man das Fluid mit einem Element nach einem der Ansprüche 1 bis 7 in Kontakt bringt.

9. Vorrichtung für die selektive Entfernung einer chemischen Spezies aus einem Fluid mit einem Gehäuse (21), das eine Kammer bildet, wobei das Gehäuse einen Fluid-Einlaß und einen Fluid-Auslaß (23,24) aufweist, die Kammer mindestens ein Element (27) mit einem Liganden für die zu entfernende Spezies aufweist, wobei das Element oder die Elemente (27) relativ zu dem Einlaß (23) und dem Auslaß (24) derart angeordnet sind, daß eine Strombahn gebildet wird, derart, daß, wenn die Vorrichtung im Gebrauch ist, Fluid, das in die Kammer durch den Einlaß (23) eintritt, über die Oberfläche des Elementes oder der Elemente (27) geführt wird, bevor das Fluid die Kammer durch den Auslaß (24) wieder verläßt, dadurch gekennzeichnet, daß das Element (27) ein Element (27) nach einem der Ansprüche 1 bis 7 ist.

10. Vorrichtung nach Anspruch 9, mit dem Element (27) in Form einer Wicklung, in der die Windungen der Wicklung durch Abstandshalter (12) voneinander getrennt sind, und in der die definierte Strombahn axial relativ zur Achse der Wicklung verläuft.

11. Vorrichtung nach Anspruch 9, mit dem Element (27) in Form einer Wicklung, in der die Windungen der Wicklung durch Abstandshalter (12) voneinander getrennt sind, und die definierte Strombahn umkreismäßig durch die Wicklungen erfolgt.

12. Vorrichtung nach Anspruch 10 oder 11, in der die Abstandsentfernung, die durch die Abstandshalter (12) hervorgerufen wird, praktisch konstant ist.

13. Vorrichtung nach Anspruch 12, in der die Abstandsentfernung, die durch die Abstandshalter (12) bewirkt wird, bei 20 bis 500 µm liegt.

## Revendications

1. Elément utilisé pour l'élimination sélective d'espèces chimiques contenues dans un fluide comprenant une feuille support étanche (10), la surface de la feuille support étant adaptée pour recevoir un ligand des espèces à éliminer caractérisé en ce que sur la feuille de support (10), on a fait adhérer une couche d'un polymère (11) ayant en surface des groupes fonctionnels par lesquels le ligand est directement ou indirectement lié au polymère.

2. Elément selon la revendication 1 dans lequel l'épaisseur de la feuille support (10) est comprise entre 0,05 et 0,5 mm.

3. Elément selon la revendication 1 ou 2 dans lequel la couche de polymère (11) est pratiquement hydrophyle.

4. Elément selon l'une quelconque des revendications précédentes dans lequel la couche de polymère (11) est pratiquement non-poreuse.

5. Elément selon l'une quelconque des revendications précédentes dans lequel le polymère (11) est obtenu à partir d'un monomère à insaturations éthyléniques contenant des groupes hydroxy.

6. Elément selon l'une quelconque des revendications précédentes dans lequel le polymère (11) est le méthacrylate d'hydroxyéthyle réticulé.

7. Elément selon l'une quelconque des revendications précédentes dans lequel l'épaisseur du polymère (11) est comprise entre 5 et 100 µm.

8. Méthode pour éliminer de façon sélective une espèce chimique contenue dans un fluide caractérisée en ce que le fluide est mis en contact avec un élément selon l'une quelconque des revendications 1 à 7.

9. Dispositif pour éliminer de façon sélective une espèce chimique contenue dans un fluide comprenant un compartiment (21) définissant une chambre, le compartiment ayant une entrée et une sortie de fluide (23, 24), la chambre contenant au moins un élément (27) comprenant un ligand de l'espèce à éliminer, le ou les éléments (27) étant situés par rapport à l'entrée (23) et à la sortie (24) pour former un chemin d'écoulement défini tel que, lorsque le dispositif est en fonctionnement, le fluide entrant dans la chambre par l'entrée (23) passe sur la surface du ou des éléments (27) avant de quitter la chambre par la sortie (24) caractérisé en ce que l'élément (27) est tel que défini dans l'une quelconque des revendications 1 à 7.

10. Dispositif selon la revendication 9 comprenant un élément (27) en forme de bobine dans laquelle les spires de la bobine sont séparées par des moyens d'espacement (12) et le chemin d'écoulement défini est axial par rapport à l'axe de la bobine.

11. Dispositif selon la revendication 9 comprenant l'élément (27) en forme de bobine dans laquelle les spires de la bobine sont séparées par des moyens d'espacement (12) et le chemin d'écoulement défini est circulaire en suivant les spires.

12. Dispositif selon la revendication 10 ou 11 dans lequel la distance de séparation obtenue par l'intermédiaire de moyens d'espacement (12) est pratiquement constante.

13. Dispositif selon la revendication 12 dans lequel la distance de séparation obtenue par l'intermédiaire des moyens d'espacement (12) est comprise entre 20 et 500 µm.
